# EUROPÄISCHE PATENTSCHRIFT

(11) **EP 2 369 171 B1**
(45) Veröffentlichungstag und Bekanntmachung des Hinweises auf die Patenterteilung: **25.11.2015**
(21) Anmeldenummer: 11156181.7
(22) Anmeldetag: 28.02.2011
(51) Int. Cl.: F03B 17/06

(54) **Wasserkraftanlage**
Hydraulic power station
Centrale hydroélectrique

(30) Priorität: 26.03.2010 DE 102010013067
(43) Veröffentlichungstag der Anmeldung: 28.09.2011
(73) Patentinhaber: KSB Aktiengesellschaft, 67227 Frankenthal (DE)
(72) Erfinder: Büchler, Dirk, 18239, Hohen Luckow (DE)

(56) Entgegenhaltungen:
- EP-A2- 1 083 333
- WO-A1-03/046375
- WO-A2-03/049257
- BE-A3- 1 017 434
- CA-A1- 2 409 502
- US-B1- 6 841 892

## Beschreibung

Die Erfindung betrifft eine Einrichtung zur Energierückgewinnung, ausgebildet als eine in frei fließenden Gewässern untergetaucht angeordnete Vorrichtung zur Erzeugung von elektrischer Energie, deren Gehäuse einen axialen Durchströmkanal mit an dessen Querschnittverengung angeordneten, einen Generator antreibenden Propeller einer Propellerturbine aufweist, wobei das dem Propeller in Durchströmrichtung nachgeordnete Gehäuse als ein sich diffusorförmig erweiterndes Ringgehäuse ausgebildet ist.

Durch die EP 1 741 926 A2 ist ein in einem Wasserstrom einzusetzender Generator bekannt, dessen Propeller völlig ohne ein umgebendes Gehäuse ausgerüstet ist. Auf einem tropfenförmigen Nabengehäuse mit integrierten Generatoreinheiten sind als Propeller zwei rotierend und beschaufelte Nabenringe angeordnet. Diese Propeller arbeiten im freien Strom und haben nur einen sehr geringen Wirkungsgrad.

Durch die CH 684 430 A5 ist eine Wasserturbine zur Gewinnung von elektrischer Energie aus einem fließenden Gewässer bekannt, bei der ein von Wasser durchflossenes Gehäuse mit einer Turbine und einem Generator versehen ist. Dieses Gehäuse ist nach Art einer Venturi-Düse gestaltet und weist eine große düsenförmige Eintrittsöffnung auf, die durch ein Gitter geschützt ist. An dem den kleinsten Durchmesser aufweisenden Ort des Gehäuses befindet sich ein Turbinenlaufrad, welches mit einem Generator verbunden ist. Aus dem Gehäuse erfolgt der Wasseraustritt durch zwei daran seitlich angeordnete, diffusorförmige Austrittsöffnungen. Diese Austrittsöffnungen überdecken teilweise einen Generator, dessen primär zylindrisch ausgebildetes Gehäuse mit einem konischen Anströmteil versehen zu sein scheint. Diese sehr lang bauende Einrichtung ist aufwändig an einem Gewässergrund zu verankern.

Die WO03/046375A zeigt eine Wasserkraftanlage mit einem abgetrennten Generator, der eigenes Gehäuse aufweist.

Der Erfindung liegt die Aufgabe zu Grunde, eine Freistromturbinenanlage mit geringem Materialeinsatz und verbesserten Wirkungsgrad zu erzeugen.

Die Lösung des Problems sieht vor, dass das Gehäuse als ein Kurzdiffusor ausgebildet ist, dass Verbindungselemente den Kurzdiffusor mit einer in Strömungsrichtung nachgeordneten und strömungsleitenden Generatorverkleidung verbinden, wobei die Generatorverkleidung in einem hinter einer Ebene der Austrittsöffnung des Kurzdiffusors befindlichen freien Raum des Fließgewässers angeordnet ist.

Dabei ist ausgehend von einem Lagerbereich des Propellers und in Abhängigkeit von einer am Lagerbereich beginnenden Länge der Generatorverkleidung diese mit einem zunehmenden Gehäusedurchmesser versehen. Mittels dieser Lösung ist eine verbesserte Energieumsetzung durch das als Kurzdiffusor ausgebildete Gehäuse sowie der im freien Raum hinter dem Kurzdiffusor angeordnete Generatorverkleidung möglich. Die angeströmte Generatorverkleidungsfläche weist insofern einen flaschenhalsförmigen Verlauf auf.

Eine aus dem Kurzdiffusor austretende Strömung trifft dahinter mit ihren äußeren Stromfäden auf eine außen um die Einrichtung und den Kurzdiffusor herum fließende Gewässerströmung. Bedingt durch die Geschwindigkeitsunterschiede dieser beiden Strömungen bildet sich zwischen ihnen eine Art von Grenzschicht aus, welche auf Grund der umgebenden äußeren Gewässerströmung als eine virtuelle äußere Grenze gegenüber dem freien Raum beziehungsweise der freien Gewässerströmung auftritt. Die hinter der Austrittsfläche oder Austrittsöffnung des Kurzdiffusors ohne eine äußere Abdeckung, Umhüllung oder sonstige Art von Einbauten im freien Raum befindliche Generatorverkleidung bildet demgegenüber eine innere Grenze für die aus dem Kurzdiffusor austretende Strömung. Diese beiden Grenzen bedingen die Ausbildung einer Ringströmung für die aus dem Kurzdiffusor austretende Strömung.

Das sogenannte Auffächern der hinter dem Kurzdiffusor sich ausbildenden Ringströmung wird durch die äußere und schneller fließende Gewässerströmung verhindert. Erst nach einer längeren Strecke hinter der Einrichtung gleichen sich die Geschwindigkeitsunterschiede zwischen der fließenden Gewässerströmung und der die Einrichtung verlassenden Strömung aus. Die aus dem Kurzdiffusor bzw. der Einrichtung austretende Strömung ist bezüglich ihrer Geschwindigkeit von einem verwendeten Propeller, dessen Aufbau und dessen Austrittsdrall abhängig. In Folge des sich hinter der Austrittsebene des Kurzdiffusors angeordneten und sich mit dem Strömungsweg oder der Generatorlänge in radialer Richtung vergrößernde Generatorverkleidung, bildet diese für die austretende Ringströmung ein energiesparendes und den Wirkungsgrad verbesserndes strömungsführendes Element. Der von der Austrittsebene des Kurzdiffusors oder des Lagerbereiches vom Propeller ausgehende, mit zunehmender Generatorlänge größer werdende Generatorverkleidungsdurchmesser, verbessert in vorteilhafter Weise die Energieumsetzung innerhalb des Kurzdiffusors.

Eine Ausgestaltung sieht hierzu vor, dass eine von einem Lagerbereich des Propellers ausgehende Gehäusemantelfläche der Generatorverkleidung als ein Rotationskörper ausgebildet ist, der aus einer Hüllkurve mit mindestens einem Wendepunkt besteht. Es wurde erkannt, dass ausgehend von der Ebene der Austrittsfläche des Kurzdiffusors die Hüllkurve der Generatorverkleidung einen größer werdenden Steigungswinkel aufweist, wobei ab einem ersten Wendepunkt der Hüllkurve der Steigungswinkel gleich bleibt oder kleiner wird. Mit diesem Verlauf einer die äußere Mantelfläche der Generatorverkleidung bildenden Hüllkurve ist eine Anpassung der Ringkanalströmung an die Strömungsverhältnisse am Aufstellort und in Abhängigkeit von einem im Kurzdiffusor verwendeten Propeller möglich. Je nach Geschwindigkeit der Gewässerströmung und der aus dem Kurzdiffusor austretenden Drallströmung kann somit eine optimale Sogwirkung erreicht werden.

Eine andere Ausgestaltung sieht vor, dass eine von der Austrittsflächenebene des Kurzdiffusors abgekehrte Generatorverkleidungs-Endfläche als ebene und/oder konkav geformte Fläche ausgebildet ist. Somit wird im freien Raum oder dem Strömungsraum hinter der Generatorverkleidung eine Abreißkante gebildet, wodurch ein die Turbinenströmung begünstigender Totwasserraum entsteht. Zusätzlich wird dadurch eine den Wirkungsgrad verbessernde achsparallele Abströmung von der Einrichtung erreicht.

Weitere Ausgestaltungen sehen vor, dass die Generatorverkleidungs-Endfläche vertieft innerhalb der Generatorverkleidung angeordnet ist. Oder dass im Zentrumsbereich der Generatorverkleidungs-Endfläche ein Strömungskegel oder Strömungskegelstumpf angeordnet ist. Dieser Kegel, Kegelstumpf oder gleichwirkend geformtes Bauteil kann über die Ebene der Generatorverkleidungs-Endfläche hinaus stehen.

Nach anderen Ausgestaltungen der Erfindung ist die Generatorverkleidungs-Endfläche in einem Abstand zur Ebene der Austrittsfläche des Kurzdiffusors angeordnet, der gleich oder kleiner als ein Durchmesser der Generatorverkleidungs-Endfläche ausgebildet ist. Die Länge der Generatorverkleidung ist gleich oder kleiner dem 2-fachen der Länge des Kurzdiffusors.

Im Gegensatz zu den in Rohren oder dergleichen eingebauten Turbinen, wie sie beispielsweise durch die WO 2009/121612 A2 bekannt sind, kann die Einrichtung mit einem Minimum an Materialeinsatz als eine ausgezeichnete Wirkungsgrade aufweisende, sehr kurz bauende Generatoreneinheit generiert werden. Dies hat den Vorteil, dass die erfindungsgemäße Lösung als Einheit leicht transportiert und an einem Aufstellort abgesenkt werden kann. Ausgestaltungen sehen hierzu vor, die Turbine mit vor ihrem Einlauf angeordneten Halteelementen zu versehen. Dies kann in Form an sich bekannter rechenförmiger Elemente bestehen, die mit einem zentrischen Zuganker zur Befestigung und als Widerlager gegenüber einer Strömung ausgestattet sind. Ein Ausführungsbeispiel der Erfindung ist in den Zeichnungen dargestellt und wird im Folgenden näher beschrieben.

Es zeigen:
- Fig. 1: eine perspektivische Ansicht der Einrichtung in Strömungsrichtung, die
- Fig. 2: eine perspektivische Ansicht entgegen der Strömungsrichtung, die
- Fig. 3: einen Schnitt durch die Einrichtung und die
- Fig. 4: eine Simulation des Strömungsverlaufes durch die Einrichtung.

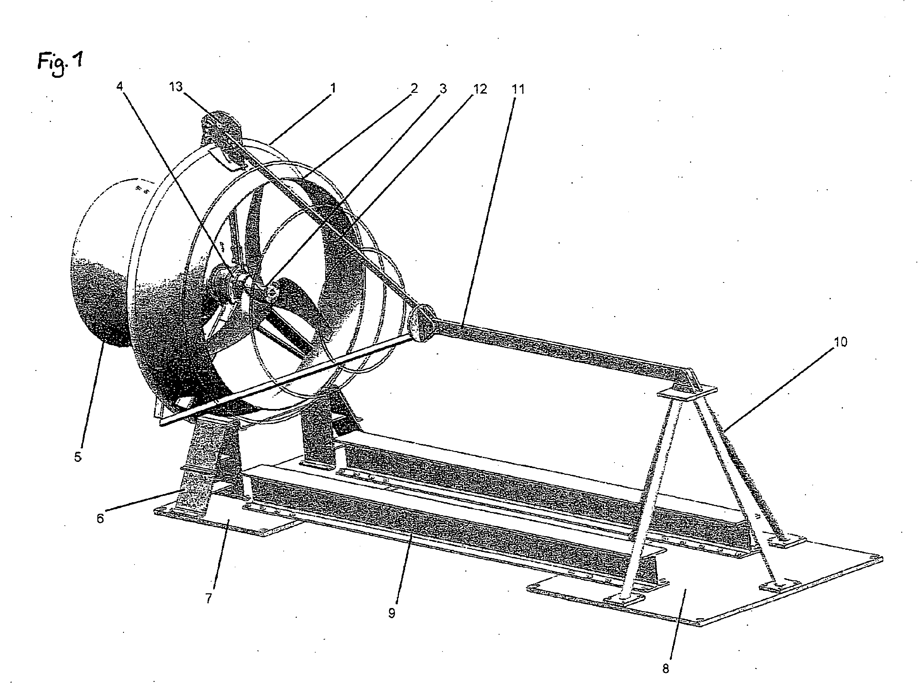

In Fig. 1 ist eine perspektivische Ansicht aus einer Anströmrichtung auf die Einrichtung zur Energierückgewinnung gezeigt. Das Gehäuse der Einrichtung ist als ein Kurzdiffusor 1 ausgebildet, in dessen Eintrittsöffnung 2 ein Propeller 3 angeordnet ist. Dem Propeller 3 nachgeordnet ist ein Lagerbereich 4, von dem aus sich in Abströmrichtung der Einrichtung eine Generatorverkleidung 5 erstreckt. Der Lagerbereich 4 ist mit Verbindungselementen 16 in Form von Streben im Kurzdiffusor gehalten.

Die Einrichtung befindet sich hier auf einem Aufnahmeteil 6, welches in diesem Fall zur Aufstellung auf einem Grund eines Fließgewässers ausgebildet ist. Dazu sind zwei Bodenplatten 7, 8 mit Abstand zueinander angeordnet und durch Längsträger 9 miteinander verbunden. Auf der in Anströmungsrichtung vor der Einrichtung befindlichen Bodenplatte 8 ist ein Lagerbock 10 angeordnet, an dem schwenkbar eine Zugstrebe 11 befestigt ist. Die Zugstrebe 11 ist mit Halterungen 12 am Kurzdiffusor angeordnet. Somit kann für Wartungszwecke die Einrichtung an einem Anschlag 13 aufgenommen und um den Lagerbock 10 schwenkend nach oben aus einem Fließgewässer heraus gehoben werden. Dies stellt für Wartungszwecke eine leichte Zugänglichkeit zur Generatorverkleidung und dem antreibenden Propeller sicher. Die Länge der Längsträger 9 und der Zugstrebe 11 wird in Abhängigkeit von einem Aufstellort und der dortigen Wassertiefe des Fließgewässers gewählt. Selbstverständlich sind auch andere Aufstellarten für die Einrichtung möglich.

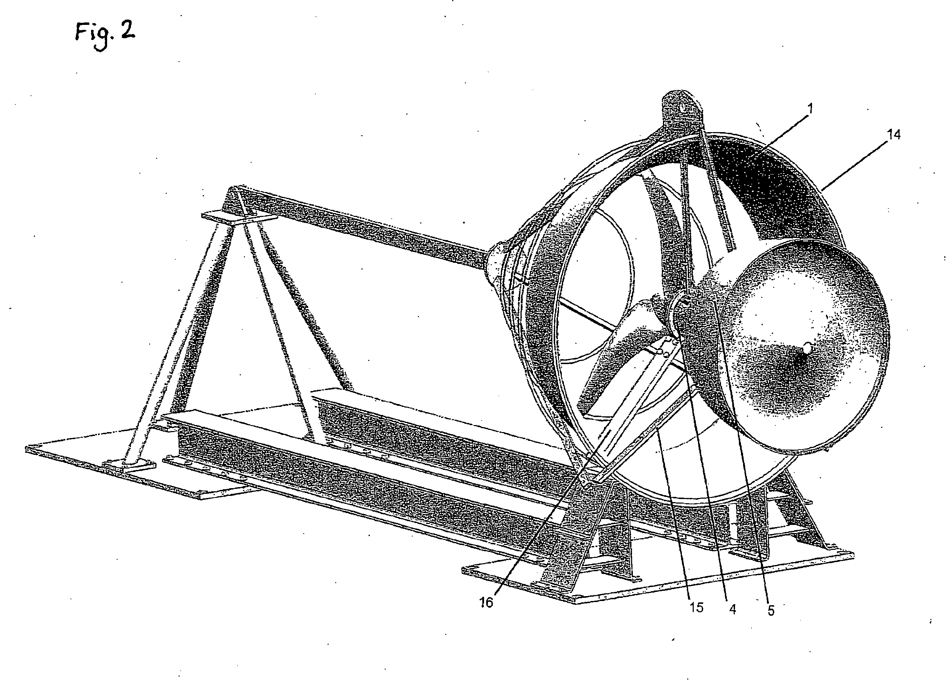

Fig. 2 zeigt entgegen der Anströmrichtung eine perspektivische Ansicht auf eine Austrittsöffnung 14 aus dem Kurzdiffusor 1. Zur Optimierung der Strömungsverhältnisse weist die Generatorverkleidung 5, welche einen darin befindlichen Generator umgibt, eine Art von flaschenhalsförmigem Verlauf der Mantelfläche auf. Der Durchmesser der Generatorverkleidung wird, ausgehend vom Lagerbereich 4 und ausgehend von der Ebene der Austrittsöffnung 14, in Abhängigkeit von einer Länge L_{G} der Generatorverkleidung 5 im Durchmesser zunehmend größer. Zusätzliche strebartige Verbindungselemente 15 halten die Generatorverkleidung 5 am Kurzdiffusor 1 fest. Die Streben 16 verbinden den Lagerbereich 4 mit dem Kurzdiffusor 1. Sie können auch zur Verbindung mit einem - hier nicht dargestellten - Generator oder der Generatorverkleidung 5 dienen.

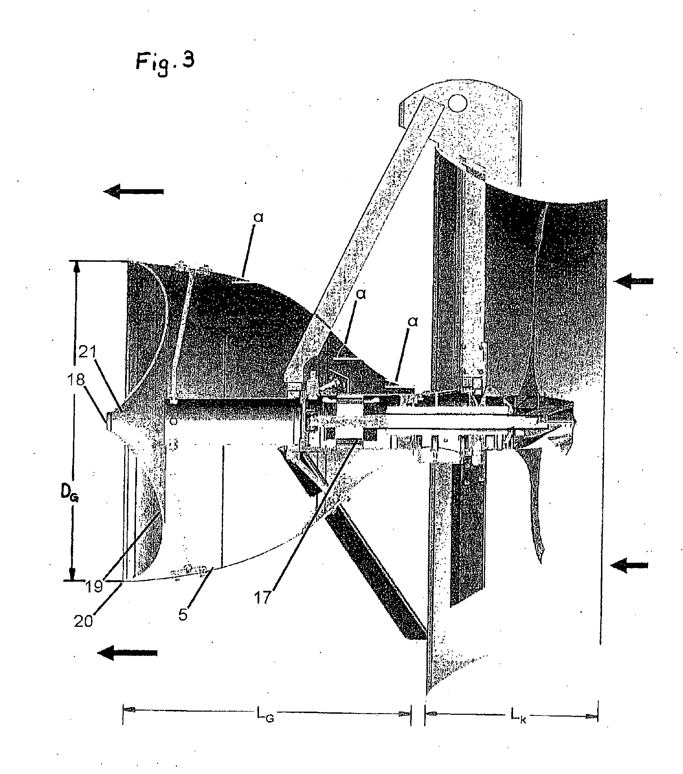

Fig. 3 zeigt einen Schnitt durch die Einrichtung. Die Generatorverkleidung 5 weist eine Mantelfläche mit einem den Wirkungsgrad verbessernden Verlauf auf. Die Mantelfläche der Generatorverkleidung 5 entspricht einer Hüllkurve, die anfänglich einen größer werdenden Steigungswinkel aufweist.

Die Baugröße der Einrichtung wird abhängig von einer auf den Kurzdiffusor 1 und den darin angeordneten Propeller 3 treffenden Fließgeschwindigkeit eines Gewässers gewählt. Die Generatorverkleidung ermöglicht es, für einen Generator 17 unterschiedliche Baugrößen vorzusehen. Deren Größe ist abhängig von den jeweiligen Gegebenheiten. Im Ausführungsbeispiel ist eine Variante des Generators 17 als eine kleinere Baugröße gezeigt.

Zur eventuellen Kühlung des Generators 17 weist die Generatorverkleidung 5 einen anströmseitigen Ringspalt 18 als Einlassöffnung für einen Flüssigkeitsstrom in die Generatorverkleidung auf. Dieser kann somit kühlend auf den Generator einwirken. Der Austritt dieses inneren Flüssigkeitsstroms erfolgt durch eine Öffnung 18, die im Zentrumsbereich der Generatorverkleidungs-Endfläche 19 angeordnet ist. Anstatt einer können auch mehrere und verteilt angeordnete Öffnungen vorgesehen sein.

Die Generatorverkleidungs-Endfläche 19 ist im Ausführungsbeispiel vertieft innerhalb der Generatorverkleidung angeordnet und als konkav gewölbte Fläche gestaltet. Somit ergibt sich der Vorteil einer verbesserten Abströmung von der Generatorverkleidung. Die mit Pfeilen gekennzeichnete Strömung findet hinter der Generatorverkleidung 5 eine Art von ringförmiger Abrisskante 20 vor, hinter bzw. innerhalb derer sich ein den Wirkungsgrad verbesserndes sogenanntes Totwasser ansammelt. Ist die Generatorverkleidungs-Endfläche 19 mit einer die Strömungsführung verbessernden kegelförmigen Gestaltung 21 versehen, deren Ende auch über die Generatorverkleidungs-Endfläche 19 oder die Abrisskante 20 in Abströmrichtung hinausragen kann, dann entsteht eine Flächenausbildung, die als eine Art von halbierter torusförmiger Mantelfläche bezeichnet werden kann. Die Gestaltung 21 ist hier als ein Kegelstumpf mit einer mittigen Austrittsöffnung 18 für ein den Generator kühlendes Wasser ausgebildet.

Die Länge (L_{G}) der Generatorverkleidung 5 ist gleich oder kleiner dem 2-fachen der Länge (L_{K}) des Kurzdiffusors 1. Somit wird im Zusammenwirken mit dem die Einrichtung außen umströmenden Fließgewässer eine Sogwirkung und achsparallele Abströmung an der Generatorverkleidung 5 erzeugt, die einen sehr guten Wirkungsgrad der Einrichtung bedingt.

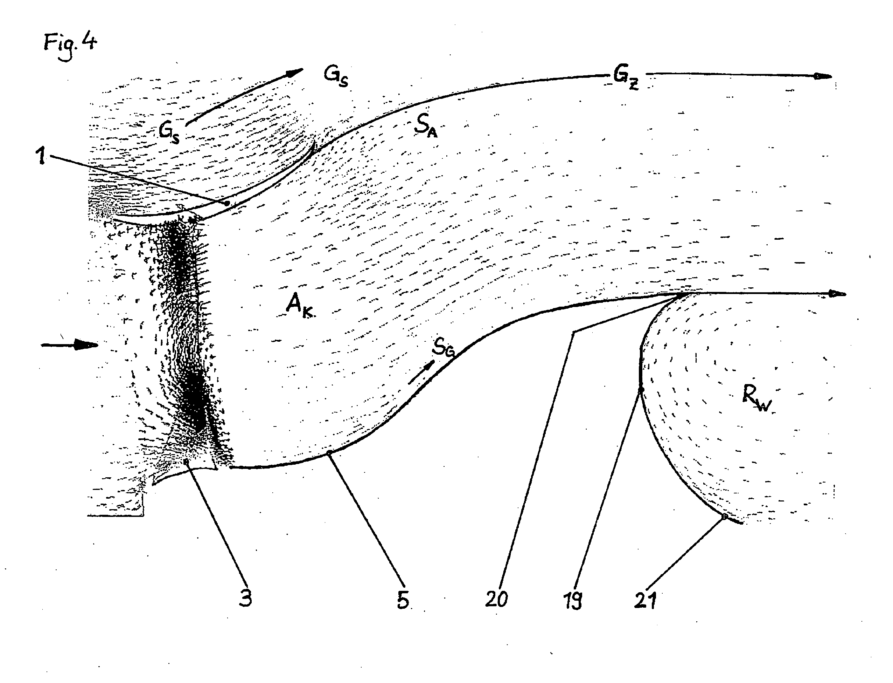

Fig. 4 zeigt einen Verlauf der Strömung durch die Einrichtung mit Hilfe von pfeilförmigen Strömungsvektoren. Eine nach dem Propeller 3 und aus dem Kurzdiffusor 1 austretende Strömung A_{K} trifft dahinter mit ihren äußeren Stromfäden S_{A} auf eine außen um die Einrichtung und den Kurzdiffusor 1 herum fließende Gewässerströmung G_{S}. Bedingt durch die Geschwindigkeitsunterschiede der beiden Strömungen A_{K} und G_{S} bildet sich dazwischen eine Art von Grenzschicht aus, welche als eine virtuelle äußere Grenze G_{Z} gegenüber dem freien Raum beziehungsweise der freien Gewässerströmung G_{S} auftritt. Eine im Nabenbereich aus dem Propeller 3 austretende und an der im freien Raum befindliche Generatorverkleidung 5 entlang fließende Strömung S_{G} bildet eine Art von innerer Grenze der die Einrichtung verlassenden Ringströmung. Die vertieft angeordneten Generatorverkleidungs-Endfläche 19 bildet gegenüber der Generatorverkleidung 5 eine Abrisskante 20 aus. Dadurch entsteht in Strömungsrichtung hinter der Generatorverkleidung 5 ein Ringwirbel R_{W}, der in Verbindung mit der die Strömung verbessernden und führenden Außenkontur der Generatorverkleidung 5 den Wirkungsgrad verbessernde achsparallele Abströmung aus der Einrichtung ermöglicht. Die Außenkontur weist einen flaschenhalsförmigen Verlauf auf.

## Patentansprüche

1. Einrichtung zur Energierückgewinnung, ausgebildet als eine in frei fließenden Gewässern untergetaucht angeordnete Vorrichtung zur Erzeugung von elektrischer Energie, in deren Gehäuse ein axialer Durchströmkanal mit an dessen Querschnittverengung angeordneten, einen Generator antreibenden Propeller (3) einer Propellerturbine angeordnet ist, wobei das dem Propeller (3) in Durchströmrichtung nachgeordnete Gehäuse als ein sich diffusorförmig erweiterndes Ringgehäuse ausgebildet ist, wobei das Gehäuse als ein Kurzdiffusor (1) ausgebildet ist, dass Verbindungselemente (15, 16) den Kurzdiffusor (1) mit einer in Strömungsrichtung nachgeordneten und strömungsleitenden Generatorverkleidung (5) verbinden, wobei die Generatorverkleidung (5) in einem hinter einer Ebene der Austrittsöffnung (14) des Kurzdiffusors (1) befindlichen freien Raum des Fließgewässers angeordnet ist, **dadurch gekennzeichnet, dass** ausgehend von einem Lagerbereich (4) des Propellers (3) und in Abhängigkeit von einer am Lagerbereich (4) beginnenden Länge (L_{G}) der Generatorverkleidung (5) diese einen zunehmenden Gehäusedurchmesser aufweist.

2. Einrichtung nach Anspruch 1, **dadurch gekennzeichnet, dass** die angeströmte Generatorverkleidung (5) einen flaschenhalsförmigen Verlauf aufweist.

3. Einrichtung nach einem der Ansprüche 1 oder 2, **dadurch gekennzeichnet, dass** eine von einem Lagerbereich (4) des Propellers (3) ausgehende Gehäusemantelfläche der Generatorverkleidung (5) als ein Rotationskörper ausgebildet ist, der aus einer Hüllkurve mit mindestens einem Wendepunkt besteht.

4. Einrichtung nach einem der Ansprüche 1 bis 3, **dadurch gekennzeichnet, dass** ausgehend von der Ebene der Austrittsfläche (14) des Kurzdiffusors (1) die Hüllkurve der Generatorverkleidung (5) einen größer werdenden Steigungswinkel (α) aufweist, wobei ab einem ersten Wendepunkt der Hüllkurve der Steigungswinkel (α) gleich bleibt oder kleiner wird.

5. Einrichtung nach einem oder mehreren der Ansprüche 1 bis 4, **dadurch gekennzeichnet, dass** eine von der Ebene der Austrittsöffnung (14) des Kurzdiffusors (1) abgekehrte Generatorverkleidungs-Endfläche (19) als ebene und/oder konkav geformte Fläche ausgebildet ist.

6. Einrichtung nach einem oder mehreren der Ansprüche 1 bis 5, **dadurch gekennzeichnet, dass** die Generatorverkleidungs-Endfläche (19) vertieft innerhalb der Generatorverkleidung (5) angeordnet ist.

7. Einrichtung nach einem oder mehreren der Ansprüche 1 bis 6, **dadurch gekennzeichnet, dass** im Zentrumsbereich der Generatorverkleidungs-Endfläche (19) eine Gestaltung (21) in Form eines Strömungskegels oder -kegelstumpfes angeordnet ist.

8. Einrichtung nach Anspruch 7, **dadurch gekennzeichnet, dass** die Gestaltung (21) in Form eines Strömungskegels oder -kegelstumpfes über die Ebene der Generatorverkleidungs-Endfläche (19) hinaus steht.

9. Einrichtung nach einem oder mehreren der Ansprüche 1 bis 8, **dadurch gekennzeichnet, dass** die Generatorverkleidungs-Endfläche (19) in einem Abstand zur Ebene der Austrittsöffnung (14) des Kurzdiffusors (1) angeordnet ist, der gleich oder kleiner als ein Durchmesser (D_{G}) der Generatorverkleidungs-Endfläche (19) ausgebildet ist.

10. Einrichtung nach Anspruch 9, **dadurch gekennzeichnet, dass** die Generatorverkleidungslänge (L_{G}) gleich oder kleiner dem 2-fachen der Länge (L_{K}) des Kurzdiffusor (1) ist.

## Claims

1. Apparatus for energy recovery, designed as a device arranged submerged in free-flowing water, for generating electrical energy, in whose casing there is arranged an axial throughflow duct with, arranged at the cross section constriction thereof, a propeller (3) of a propeller turbine driving a generator, wherein the casing arranged downstream of the propeller (3) is designed as an annular casing which widens in the manner of a diffuser, wherein the casing is designed as a short diffuser (1), wherein connection elements (15, 16) connect the short diffuser (1) to a downstream, flow-guiding generator housing (5), wherein the generator housing (5) is arranged in a free space of the flowing water downstream of a plane of the outlet opening (14) of the short diffuser (1), **characterized in that**, proceeding from a mounting region (4) of the propeller (3) and as a function of a length (L_{G}), starting at the mounting region (4), of the generator housing (5), the latter has an increasing casing diameter.

2. Apparatus according to Claim 1, **characterized in that** the generator housing (5) subjected to incident flow has a bottleneck-shaped profile.

3. Apparatus according to Claim 1 or 2, **characterized in that** a casing shroud surface of the generator housing (5), proceeding from a mounting region (4) of the propeller (3), is designed as a rotational body which consists of an enveloping curve having at least one inflection point.

4. Apparatus according to one of Claims 1 to 3, **characterized in that**, proceeding from the plane of the outlet surface (14) of the short diffuser (1), the enveloping curve of the generator housing (5) has an increasing gradient angle (α), the gradient angle (α) remaining constant or decreasing from a first inflection point of the enveloping curve.

5. Apparatus according to one or more of Claims 1 to 4, **characterized in that** a generator housing end surface (19), oriented away from the plane of the outlet opening (14) of the short diffuser (1), is designed as a planar and/or concave surface.

6. Apparatus according to one or more of Claims 1 to 5, **characterized in that** the generator housing end surface (19) is arranged recessed within the generator housing (5).

7. Apparatus according to one or more of Claims 1 to 6, **characterized in that**, in the central region of the generator housing end surface (19), there is arranged a feature (21) in the form of a flow cone or a truncated flow cone.

8. Apparatus according to Claim 7, **characterized in that** the feature (21) in the form of a flow cone or a truncated flow cone projects beyond the plane of the generator housing end surface (19).

9. Apparatus according to one or more of Claims 1 to 8, **characterized in that** the generator housing end surface (19) is arranged at a distance from the plane of the outlet opening (14) of the short diffuser (1), which distance is equal to or less than a diameter (D_{G}) of the generator housing end surface (19).

10. Apparatus according to Claim 9, **characterized in that** the generator housing length (L_{G}) is equal to or less than twice the length (L_{K}) of the short diffuser (1).

## Revendications

1. Dispositif pour la récupération d'énergie, réalisé sous la forme d'un dispositif immergé installé dans des eaux s'écoulant librement pour la production d'énergie électrique, dans l'enceinte duquel un canal d'écoulement axial est disposé avec une hélice (3) d'une turbine à hélice entraînant un générateur et disposée à son étranglement de section transversale, dans lequel l'enceinte disposée en aval de l'hélice (3) dans la direction d'écoulement est réalisée en forme d'enceinte annulaire s'évasant en forme de diffuseur, dans lequel l'enceinte est constituée par un diffuseur court (1), dans lequel des éléments de liaison (15, 16) relient le diffuseur court (1) à un carénage de générateur (5) disposé en aval dans la direction d'écoulement et guidant l'écoulement, dans lequel le carénage de générateur (5) est disposé dans un espace libre du courant d'eau se trouvant derrière le plan de l'ouverture de sortie (14) du diffuseur court (1), **caractérisé en ce que**, en partant d'une région de palier (4) de l'hélice (3) et en fonction d'une longueur (L_{G}) du carénage du générateur (5) commençant à la région de palier (4), ce carénage présente un diamètre d'enceinte croissant.

2. Dispositif selon la revendication 1, **caractérisé en ce que** l'entrée du carénage de générateur (5) présente une allure en forme de goulot de bouteille.

3. Dispositif selon l'une des revendications 1 ou 2, **caractérisé en ce qu'**une enveloppe d'enceinte du carénage de générateur (5) partant d'une région de palier (4) de l'hélice (3) est réalisée sous la forme d'un corps de rotation, qui se compose d'une courbe enveloppe avec au moins un point d'inflexion.

4. Dispositif selon l'une quelconque des revendications 1 à 3, **caractérisé en ce que**, en partant du plan de la face de sortie (14) du diffuseur court (1), la courbe enveloppe du carénage de générateur (5) présente un angle de montée (α) croissant, dans lequel, à partir d'un premier point d'inflexion de la courbe enveloppe, l'angle de montée (α) reste constant ou diminue.

5. Dispositif selon une ou plusieurs des revendications 1 à 4, **caractérisé en ce qu'**une face terminale (19) du carénage de générateur détournée du plan de l'ouverture de sortie (14) du diffuseur court (1) est réalisée sous la forme d'une face plane et/ou de forme concave.

6. Dispositif selon une ou plusieurs des revendications 1 à 5, **caractérisé en ce que** la face terminale (19) du carénage de générateur est agencée en profondeur à l'intérieur du carénage de générateur (5).

7. Dispositif selon une ou plusieurs des revendications 1 à 6, **caractérisé en ce qu'**une structure (21) en forme de cône ou de tronc de cône d'écoulement est disposée dans la région centrale de la face terminale (19) du carénage de générateur.

8. Dispositif selon la revendication 7, **caractérisé en ce que** la structure (21) sort en forme de cône ou de tronc de cône d'écoulement au-delà du plan de la face terminale (19) du carénage de générateur.

9. Dispositif selon une ou plusieurs des revendications 1 à 8, **caractérisé en ce que** la face terminale (19) du carénage de générateur est disposée à une distance du plan de l'ouverture de sortie (14) du diffuseur court (1), qui est égale ou inférieure à un diamètre (D_{G}) de la face terminale (19) du carénage de générateur.

10. Dispositif selon la revendication 9, **caractérisé en ce que** la longueur du carénage de générateur (L_{G}) est égale ou inférieure à deux fois la longueur (L_{K}) du diffuseur court (1).
